# EUROPEAN PATENT SPECIFICATION

(11) **EP 3 462 418 B1**
(45) Date of publication and mention of the grant of the patent: **19.06.2024**
(21) Application number: 17193803.8
(22) Date of filing: 28.09.2017
(51) Int. Cl.: G06T 15/08, G06T 15/50, G06T 15/80

(54) **METHOD AND APPARATUS FOR RENDERING MATERIAL PROPERTIES**
VERFAHREN UND VORRICHTUNG ZUR DARSTELLUNG VON MATERIALEIGENSCHAFTEN
PROCÉDÉ ET APPAREIL PERMETTANT DE RENDRE DES PROPRIÉTÉS DE MATÉRIAUX

(43) Date of publication of application: 03.04.2019
(73) Proprietor: Siemens Healthineers AG, 91301 Forchheim (DE)
(72) Inventor: Petkov, Kaloian, Lawrenceville, NJ 08648 (US); Treffer, Philipp, 93051 Regensburg (DE); Yu, Daphne, Yardley, PA 19067 (US); Swamydoss, Babu, Plainsboro, NJ 08536 (US); Qiu, Feng, Pennington, NJ 08534 (US)
(74) Representative: EIP

(56) References cited:
- US-A1- 2014 232 719
- SALAMA C R ED - MYLES A ET AL: "GPU-Based Monte-Carlo Volume Raycasting", COMPUTER GRAPHICS AND APPLICATIONS, 2007. PG '07. 15TH PACIFIC CONFERENCE ON, IEEE, PISCATAWAY, NJ, USA, 29 October 2007 (2007-10-29), pages 411-414, XP031338476, ISBN: 978-0-7695-3009-3
- T.Kroes, F. H. Post, C. P. Botha: "Interactive direct volume rendering withphysically-based lighting", Data Visualization, Department of Mediamatics, TU Delft, The Netherlands , 2012, XP002778891, Retrieved from the Internet: URL:https://graphics.tudelft.nl/Publicatio ns-new/2012/KPB12a/Kroes2011.pdfPublicati [retrieved on 2018-03-07]
- LEVOY M: "A hybrid ray tracer for rendering polygon and volume data", IEEE COMPUTER GRAPHICS AND APPLICATIONS, IEEE SERVICE CENTER, NEW YORK, NY, US, vol. 10, no. 2, 1 March 1990 (1990-03-01), pages 33-40, XP011413654, ISSN: 0272-1716, DOI: 10.1109/38.50671

## Description

### Technical Field

The present invention relates to rendering material properties, and more specifically to physically-based volumetric rendering of material properties of a surface of an object.

### Background

Physically-based volumetric rendering is a model in computer graphics that mimics the real-world interaction of light with 3D objects or tissues. Physically-based volumetric rendering based on Monte Carlo path tracing is a rendering technique for light transport computations, where the natural light phenomena are modelled using a stochastic process. The physically-based volumetric rendering can produce a number of global illumination effects, and hence result in more realistic images, as compared to images from traditional volume rendering, such as ray casting or direct volume rendering. Such effects include ambient light occlusion, soft shadows, colour bleeding and depth of field. The increased realism of the images can improve user performance on perceptually-based tasks. For example, photorealistic rendering of medical data may be easier for a surgeon or a therapist to understand and interpret, and may support communication with the patient and educational efforts.

However, evaluation of the rendering integral in physically-based volumetric rendering based on Monte Carlo path tracing may require many, e.g. thousands, of stochastic samples per pixel to produce an acceptably noise-free image. Depending on the rendering parameters and the processor used, therefore, producing an image may take on the order of seconds for interactive workflows and multiple hours for production-quality images. Devices with less processing power, such as mobile devices, may take even longer. These rendering times may result in overly long interaction times as a user attempts to refine the rendering to achieve the desired results.

Further, although physically based volumetric rendering can produce realistic tissue textures and shape perception on a computer display, a physical model is still desirable in some cases, for example to size up surgical implants or instruments, or plan therapy approaches, or for educational purposes. Physical objects may be made from additive manufacturing processes, such as 3D printing, using 3D printable models. Existing 3D printed objects for medical workflows are derived from segmentations of medical data. In such cases, a solid colour is used to visually separate segmented objects.

However, while existing 3D printable models can depict physical shapes, they lack details, such as tissue texture, and hence lack realism. This can limit their utility.

The publication "GPU-Based Monte-Carlo Volume Raycasting" (SALAMA), Computer Graphics and Applications, 2007. PG'07. 15th Pacific Conference on, IEEE, Piscataway, NJ, USA, 29 October 2007, pages 411-414, XP031338476, ISBN:978-0-7695-3009-3 discloses stochastic raytracing techniques for volume rendering. A phenomenological scattering model related to the Phong illumination model is proposed.

US 2014/232719A1 discloses an illumination model that models how light from a virtual light source interacts with tissue of interest as it travels to a point of view.

The publication "Interactive direct volume rendering with physically-based lighting" (T. KROES, F.H.POST, C.P. BOTHA), Data Visualization, Department of Mediamatics, TU Delft, The Netherlands, 2012, XP00277891 discloses a method of realistic illumination in volume visualisation including the configuration of any number of arbitrarily shaped and textured area lights, and the modelling of light at a film plane.

### Summary

According to a first aspect of the present invention, there is provided a method of generating a three-dimensional representation of the surface texture of an object, the method comprising:
acquiring a medical dataset comprising a three-dimensional representation of a three-dimensional object, the object having a surface;
determining, based on the medical dataset, a surface structure coincident with, or offset from and parallel with, the surface of the object;
deriving, based on the determined surface structure, a plurality of rendering locations;
rendering, by a physically-based volumetric renderer and from the medical dataset, one or more material properties of the surface of the object, at each of the plurality of rendering locations, wherein the rendering comprises ray tracing, wherein each of the plurality of rendering locations corresponds to a ray origin for the ray tracing, wherein, for each ray origin, the ray direction is parallel to the surface normal of the surface structure at the ray origin; and
storing the one or more material properties per rendering location; generating a three-dimensional representation of the surface texture of the object from the stored information.

One or more of the plurality of rendering locations may be located substantially at the surface structure.

The one or more rendered material properties may comprise one or more of: a scattering coefficient, a specular coefficient, a diffuse coefficient, a scattering distribution function, a bidirectional transmittance distribution function, a bidirectional reflectance distribution function, and colour information.

The rendering may comprise Monte Carlo-based rendering.

The method may comprise:
determining, based on one or more of the rendered material properties, one or more material specification codes for an additive manufacturing software and/or for a visualisation software.

The determining the material specification code may comprise determining a material specification code for one or more regions of the object.

The method may comprise:
transmitting the determined material specification code per rendering location and/or per region to an additive manufacturing unit and/or to a visualisation unit.

The surface structure may be a closed surface structure.

The determining the surface structure may comprise:
segmenting the medical dataset to produce a segmentation surface; and
generating the surface structure from the segmentation surface.

The determining the surface structure may comprise:
generating a point cloud representing the medical dataset; and
generating the surface structure from the point cloud.

The generating the point cloud may comprise:
rendering, by the physically-based volumetric renderer and from the medical dataset, pixels representing the object projected onto a two-dimensional viewpoint;
locating a depth for each of the pixels; and
generating the point cloud from the pixel and the depth for each of the pixels.

The method may comprise:
offsetting one or more of the plurality of rendering locations from the surface structure based on one or more detected properties of the medical dataset and/or the surface of the object.

The surface structure may comprise texture mapping coordinates, and the plurality of rendering locations may be derived from the texture mapping coordinates.

The surface structure may be a mesh.

One or more of the plurality of rendering locations may each located at a vertex of the mesh.

The method may comprise:
performing mesh processing on the mesh, the mesh processing comprising one or more of mesh repair, mesh smoothing, mesh subdividing, mesh scaling, mesh translation, mesh thickening, and generating one or more texture coordinates for mapping one or more mesh coordinates to texture space.

According to a second aspect of the present invention, there is provided apparatus for rendering one or more material properties of a surface of an object, the apparatus being arranged to perform the method according to the first aspect.

According to a third aspect of the present invention, there is provided a computer program comprising instructions which when executed by a computer causes the computer to perform the method according to the first aspect.

Further features and advantages of the invention will become apparent from the following description of preferred embodiments of the invention, given by way of example only, which is made with reference to the accompanying drawings.

### Brief Description of the Drawings

Figure 1 illustrates schematically a method for rendering material properties of a surface of an object, according to an example;
Figures 2a illustrates schematically a medical dataset according to an example;
Figure 2b illustrates schematically a medical dataset including a generated surface structure according to an example; and
Figure 3 illustrates schematically a system comprising an apparatus for rendering material properties of a surface of an object, according to an example.

### Detailed Description

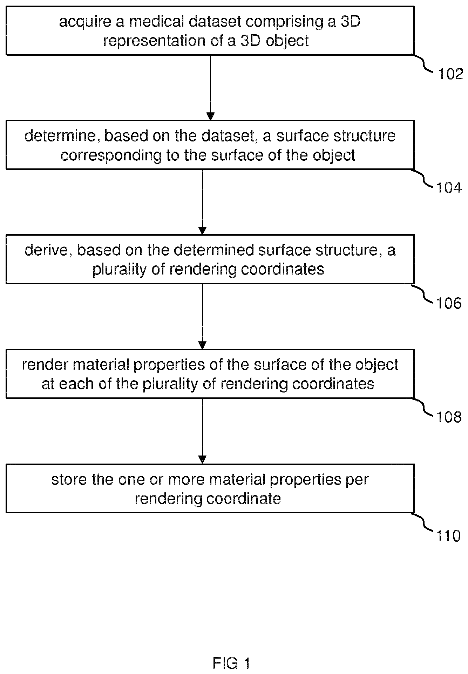

Referring to Figure 1, there is illustrated schematically a method of rendering one or more material properties of a surface of an object, according to an example.

In step 102, the method comprises acquiring a medical dataset.

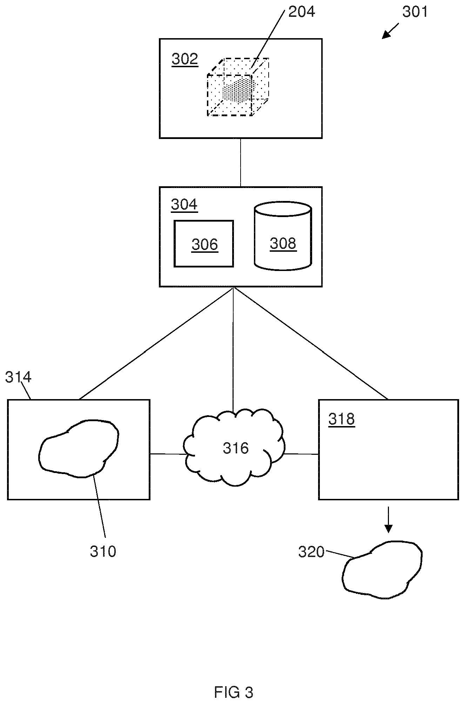

The medical dataset comprises a three-dimensional (3D) representation of a three-dimensional (3D) object. The medical dataset may be acquired by loading from a memory, sensors, and/or other sources. The medical dataset may be provided from a scanner (see e.g. scanner 302 in Figure 3). For example, the medical dataset may be derived from computed tomography, magnetic resonance, positron emission tomography, single photon emission computed tomography, ultrasound, or another scan modality. The scan data may be from multiple two-dimensional scans or may be formatted from a 3D scan. The dataset may comprise data formatted as voxels in a uniform or non-uniform 3D grid, or a scan format (e.g., polar coordinate format). Each voxel or grid point is represented by 3D location (e.g., x, y, z) and an intensity, scalar, or other information. The medical dataset may represent a patient, for example a human patient. In some examples, the medical dataset may be for veterinary medicine.

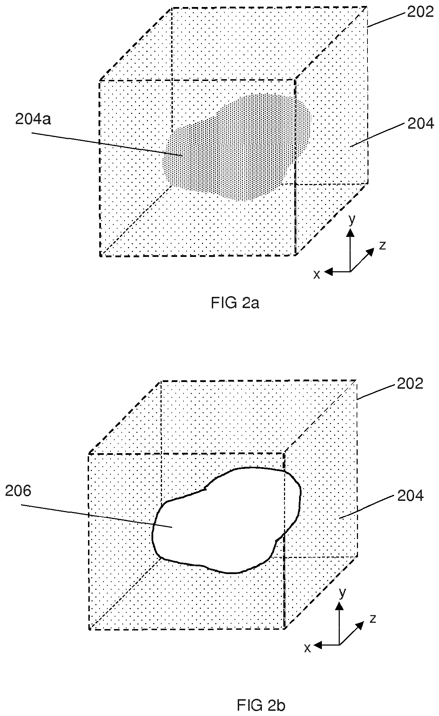

In an example illustrated schematically in Figures 2a and 2b, a medical dataset comprises voxels 204 in a uniform 3D grid 202 defined by cartesian coordinates x, y, z. The medical dataset comprises a 3D representation 204a of a 3D object. For example, the 3D object may be a heart surrounded by other tissue of a patient. Voxels 204a of the medical dataset corresponding to the heart may comprise information different to voxels 204 of the medical dataset corresponding to the surrounding tissue (illustrated schematically in Figure 2a by differing voxel shade).

Returning to Figure 1, the method comprises in step 104 determining a surface structure 206 corresponding to the surface of the object.

The surface structure 206 may be parallel with the surface of the object. For example, the surface structure may be offset from and parallel with the surface of the object. As another example, the surface structure 206 may coincide with the surface of the object. The surface structure 206 may follow the contours of the 3D representation of the object. As illustrated schematically in Figure 2b, the surface structure 206 may be coincident with the boundary of the voxels 204a of the dataset corresponding to the object (e.g. heart) and the voxels 204 of the medical dataset corresponding to the material surrounding the object (e.g. other tissue surrounding the heart). The surface structure 206 may be a closed surface structure 206.

The surface structure 206 may be a mesh. The mesh may be a polygon mesh, for example a triangular mesh. The mesh may comprise a plurality of vertices, edges and faces that correspond to the shape of the surface of the object.

The step 104 of determining the surface structure 206 may comprise segmenting the medical dataset 204. For example, determining the surface structure 206 may comprise segmenting the medical dataset 204 to produce a segmentation surface, and generating the surface structure 206 from the segmentation surface. For example, a marching cubes algorithm may be used to generate a segmentation surface from a segmentation mask of the medical dataset.

The segmentation of the dataset 204 may be by automated segmentation tools. For example, a segmentation tool may analyse information of each voxel 204 of the medical dataset to determine a class descriptor for that voxel. For example, class descriptors may include "heart tissue" and "other tissue". The segmentation tool may segment the medical dataset according to class descriptor, i.e. voxels with a common class descriptor are assigned to a common segment. For example, the voxels 204a corresponding to the heart may form a first segment, and the voxels 204 corresponding to tissue surrounding the heart may form a second segment.

The segmentation of the dataset 204 may be by manual segmentation, for example by slice-by-slice segmentation. The segmentation may be semi-automated, for example by region growing algorithms. For example, one or more seed voxels 204, 204a may be selected and assigned a region, neighbouring voxels may be analysed to determine whether the neighbouring voxels are to be added to the region. This process is repeated until the medical dataset is segmented.

A surface structure 206, such as a mesh, may be generated corresponding to the segmentation surface. For example, the surface structure 206 may be determined as a surface structure 206 coincident with the segmentation surface of a given segment of the medical dataset. The segmentation surface itself may be converted into a mesh format. The segmentation surface may be exported in a standard mesh format. As another example, the surface structure 206 may be determined as a surface structure 206 offset from and parallel with the segmentation surface of a given segment of the medical dataset.

In another example, the step 104 of determining the surface structure 206 may be based on a point cloud representing the medical data set. The point cloud may comprise a set of data points in a three-dimensional coordinate system. The points may represent the surface of the object. Determining the surface structure 206 may comprise generating a point cloud representing the medical dataset, and generating the surface structure 206 from the point cloud. For example, the point cloud may be used to generate a mesh.

The point cloud may be generated by rendering, by a physically-based volumetric renderer and from the medical dataset, pixels representing the object projected onto a two-dimensional viewpoint, locating a depth for each of the pixels, and generating the point cloud from the pixel colour and the depth for each of the pixels.

For example, the physically-based volumetric renderer may simulate the physics of light propagation, and model the paths of light or photons, including due to scattering and absorption, through the medical dataset, to render a 2D grid of pixels representing a projection of the object in two dimensions. A depth value may be generated for each pixel. For example, the depth for a given pixel may be assigned based on opacity. The opacity of the voxels along the viewing ray for that pixel may be examined. The depth of the voxel with the maximum opacity relative to the viewing plane may be used as a depth of the pixel. Alternatively, the depth at which an accumulated opacity from the viewing plane along a given ray reaches a threshold amount may be used as the depth of the pixel. In another example, the depth may be located with clustering. Each of the sampling points used by the physically-based volumetric renderer in rendering the pixels may include an amount of scattering. The density of the sampling points where photon scattering is evaluated may be determined. By clustering sampling points, a depth or depth range associated with the greatest cluster (e.g., greatest average scattering, greatest total scattering, greatest number of sample points in the cluster, and/or nearest depth with sufficient cluster of scattering) may be assigned to the pixel. Any clustering, other heuristic may be used.

The point cloud may be generated from the 2D grid of pixels and the depth information for each of the pixels. For example, the position of the pixel in the 2D grid may be combined with the depth allocated to each pixel to generate a 3D position for each point of the point cloud. More than one depth may be assigned along a given viewing ray or for a given pixel, for example, clustering may show several surfaces. The point cloud may then be used to generate the surface structure 206. For example, highest point density regions of the point cloud may be assigned as the surface of the object and the surface structure 206 may be generated to be coincident with that surface and/or follow the contours of that surface. The surface structure 206 so generated may be a mesh. The mesh may be generated from the point cloud using a triangulation algorithm, or by Poisson surface reconstruction or the like.

The step 104 of determining the surface structure 206 may comprise performing post-processing of the surface structure 206. For example where the surface structure 206 is a mesh, the method may comprise performing mesh processing on the mesh. The mesh post-processing may comprise one or more of mesh repair, mesh smoothing, mesh subdividing, mesh closing, mesh scaling, mesh translation, and mesh thickening.

Mesh repair may comprise closing open portions of the generated mesh. Mesh smoothing may comprise detecting areas of the mesh that are noisy, e.g. which fluctuate in location widely over small distances, and smoothing these areas, for example by averaging. Mesh subdividing may comprise dividing the generated mesh into a finer mesh, i.e. with a greater number of vertices, edges and/or faces per unit area. Mesh scaling may comprise increasing and/or decreasing the size or one or more dimensions of the mesh. Mesh translation may comprise moving or translocating the mesh from an original position to a different position in three-dimensional space.

Mesh thickening may comprise increasing a thickness of the mesh. For example, the thickness of the mesh may be increased in a direction parallel to the surface normal of the mesh. Mesh thickening may comprise generating an offset mesh based on the original mesh. The offset mesh may be isocentric with the original mesh. Mesh thickening may comprise closing the original mesh and the offset mesh so as to ensure a closed volume is defined by the thickened mesh. The thickened mesh may be scaled and/or translated as required. The thickened mesh may be represented as a tetrahedral mesh.

The mesh post-processing may comprise generating one or more texture coordinates for mapping one or more mesh coordinates to texture space. Texture space may be defined in two dimensions by axes denoted U and V. A texture coordinate may be generated for each mesh vertex or each mesh face. Generating one or more texture coordinates may comprise using a UV unwrapping algorithm. UV unwrapping may comprise unfolding the mesh into a two-dimensional plane and determining the UV coordinates to which the mesh vertices correspond. Other modelling processes for generating one or more texture coordinates for mapping one or more mesh coordinates to texture space may be used. These processes may include simplification and or decimation (i.e. reducing the number of faces, edges and/or vertices of the surface mesh while keeping the overall shape).

Returning to Figure 1, the method comprises, in step 106, deriving, based on the determined surface structure, a plurality of rendering locations.

One or more of the plurality of rendering locations may be located substantially at the surface structure 206. For example, one or more of the plurality of rendering locations may be coincident with the surface structure 206. For example, one or more of the plurality of rendering locations may be located at a vertex of the mesh surface structure 206.

The method comprises, in step 108, rendering, by a physically-based volumetric renderer and from the medical dataset, one or more material properties of the surface of the object, at each of the plurality of rendering locations, wherein the rendering comprises ray tracing, wherein each of the plurality of rendering locations corresponds to a ray origin for the ray tracing, wherein, for each ray origin, the ray direction is parallel to the surface normal of the surface structure at the ray origin.

The physically based volumetric renderer may comprise any physically-based rendering algorithm capable of computing light transport. The physically-based volumetric rendering simulates the physics of light propagation in the dataset to determine physical properties of the object of the medical dataset at each of the plurality of rendering locations. In such a way, the rendering locations may be thought of as together defining a viewing plane for the renderer.

The rendering comprises path or ray tracing. The ray tracing may involve integrating over all the simulated illuminance arriving at each of the plurality of rendering locations. The ray tracing may comprise modelling the paths of light rays or photons, including due to scattering and absorption, from a ray origin. Each of the plurality of rendering locations corresponds to a ray origin for the ray tracing. For example, each vertex of the mesh surface structure may correspond to a ray origin for the rendering. The ray direction for a given ray is parallel to the surface normal of the surface structure.

During ray tracing, different levels or amounts of scattering and/or absorption may be modelled for each sampling point of the dataset representing the 3D object. The physically-based volumetric rendering result may be built up over time as the rendering may rely on probabilistic scattering and tracing millions of light paths. The rendering may comprise Monte Carlo-based rendering. For example, the path tracing may comprise Monte-Carlo path tracing, where the natural light phenomena are modelled using a stochastic process.

The one or more rendered material properties may comprise one or more of: a scattering coefficient, a specular coefficient, a diffuse coefficient, a scattering distribution function, a bidirectional transmittance distribution function, a bidirectional reflectance distribution function, and colour information. These material properties may be used to derive a transparency, reflectivity, surface roughness, and/or other properties of the surface of the object at the rendering location. These surface material properties may be derived based on scalar values of the medical dataset at the rendering location, and/or based on user-specified parameters.

As mentioned above, one or more of the plurality of rendering locations (and therefore ray origins for ray tracing) may be coincident with the surface structure 206, and the ray direction for ray casting at a given ray origin may be parallel to the surface normal of the surface structure at that ray origin. However, in some examples, one or more of the plurality of rendering locations (and therefore ray origins for ray tracing) may be offset from the surface structure 206. The offset may be determined based on one or more heuristics. For example, the ray origin may be offset from the surface structure 206 by a fixed distance. The ray origin may be offset from the surface structure 206 until the ray origin lies in empty space. These offsets may allow more accurate capture of the one or more material properties of the object surface.

One or more of the plurality of rendering locations (and hence ray origin for ray casting) may be modified based on any detected or derived, or user selected property of the dataset or the surface structure 206. For example, it may be detected that the medical dataset at or near the surface structure 206 comprises vessels or some other detail that may benefit from further techniques to reproduce them more accurately. For example, reproduction of detailed structure may benefit from antialiasing techniques. For example, if vessels are detected at or near a given rendering location, then instead of a single rendering location at that point, a further plurality of rendering locations (and hence ray origins) may be generated offset from that point, for example each with a varying ray direction, to better capture the detail of the surface of the object near that point. For example, rays may be cast in a cylinder or a cone about the given rendering location. For example, the rendering location may be offset away from the surface structure 206 along the surface normal, and the ray directions may then be generated in a cone where the rendering location is the apex of the cone. The material properties rendered for each of the further plurality of rendering locations may then for example be averaged to give a more accurate reflection of the material property at the given rendering location.

As mentioned above, one or more (or all) of the rendering locations may be at a vertex of the mesh surface structure. However, in some examples, a regular sampling of the surface may be used, for example the plurality of rendering locations may be distributed substantially regularly over the surface structure. In some examples, the mesh surface structure may be subdivided before the rendering locations are assigned to each vertex, to increase the resolution of the generated texture. For example, subdivision algorithms such as Catmull-Clark and Least Squares Subdivision Surfaces (e.g. LS3 Loop) may be used, although it will be appreciated that any suitable subdivision algorithm may be used. In other examples, the surface structure 206 may be a 3D surface model having existing texture mapping coordinates on which to render an image texture. For example, the plurality of rendering locations may be derived from the texture mapping coordinates, for example be the same as texture mapping coordinates. Conceptually, each pixel of the texture may correspond to a rendering location. In practice, each pixel of the texture may correspond to a ray origin and direction.

The path length of one or more (or all) of the rays for ray tracing may be a constraint of the rendering. For example, the path length must be a minimum distance along the surface normal to contribute to the rendering. This may provide that sufficient sampling of the surface of the object is performed to capture the relevant surface characteristics, for example tissue characteristics.

Since the surface structure 206 corresponds to the surface of the 3D representation of the object, and the rendering locations (and therefore ray origins for ray tracing) are derived based on the surface structure 206, the rendered material properties may accurately represent the material properties of the surface of the object. For example, as described above, the surface structure 206 may be coincident with the surface of the object, and the rendering locations may be coincident with the surface structure 206. In this case, in effect, the viewing plane of the renderer may be coincident with the surface of the object. In other examples, the surface structure 206 may be parallel with and offset from the surface of the object, and the rendering locations may be coincident with the surface structure 206; or the surface structure 206 may be coincident with the surface of the object, and the rendering locations may be offset from the surface structure (e.g. as described above); or the surface structure 206 may be parallel with and offset from the surface of the object, and the rendering locations may be offset from the surface structure (e.g. as described above). In each case, since the rendering locations (and hence, in effect the viewing plane of the renderer) are based on the determined surface of the object itself, the physically based volumetric rendering at those rendering locations may accurately reproduce material properties of the surface of the object.

The rendering may be based on one or more rendering parameters. The rendering parameters may be set as a default, set by the user, determined by a processor, or combinations thereof. The rendering parameters may include data consistency parameters. The data consistency parameters may include one or more of windowing, scaling, level compression, and data normalization. The rendering parameters may comprise lighting parameters. The lighting parameters may comprise one or more of a type of virtual light, a position of the virtual light sources, an orientation of the virtual light sources, image-based lighting sources, and ambient lighting. The rendering parameters may comprise viewing parameters. The rendering parameters may be modified to account for how the visualised or printed object is to be viewed. For example, the rendering parameters may be modified to reduce or eliminate shadow strength, modify virtual light sources to match expected real-world light sources, modifying colour etc.

In some examples, there may be more than one part or component per object. In the case one or more parts or components of the structure are concealed or covered by another part of the structure, the renderer may iterates the above described rendering from inside-to-outside. That is, the renderer may render the material properties per rendering location of the covered part or component or object before it renders the material properties per rendering location of the covering part or component or object. This can allow a realistic surface texture to be determined even for surfaces that are covered or concealed. The inside-to-outside rendering methodology may be applied, for example, when rendering tissues with known containment, such as brain tissue (cortical, subcortical tissue) and heart anatomy (Endo-, Myo-, Epi-Cardium or blood pool).

The method comprises, at step 110, storing the one or more material properties per rendering location. For example, the material property may be stored in association with the corresponding rendering location (for example in the form of a coordinate in a three-dimensional cartesian coordinate system) in a computer storage. For example, this information may comprise the coordinate of each rendering location in three-dimensional space, and the material property of the surface rendered at each respective rendering location. As such, for example, a realistic three-dimensional representation of the surface texture of the object is generated from the stored information. This information is therefore in itself useful. The information may find utility in a number of different ways.

For example, the method may further comprise determining, based on one or more of the rendered material properties, one or more material specification codes for an additive manufacturing software and/or for a visualisation software. The method may then comprise transmitting the determined material specification code per rendering location and/or per region to an additive manufacturing unit (see e.g. 318 of Figure 3) and/or to a visualisation unit (see e.g. 314 of Figure 3).

For example, each rendered material property may be assigned a material specification code. For example, the material specification code may be a material specification code of a .mtl (material template library) file for Wavefront^{™} .OBJ file. The .OBJ file format is for use with visualisation software and other 3D graphics applications. The OBJ file is a geometry definition file. The file format represents 3D geometry, and may, for example specify the position each vertex of the mesh surface structure, the UV position of each texture coordinate vertex, vertex normals, and the faces that make each polygon defined as a list of vertices. The .mtl file is a companion file format to an .OBJ file, that describes surface material properties of objects within one or more .OBJ files. The .mtl references one or more material descriptions by name, i.e. by material specification codes. As another example, the material specification code may be a material specification code in a .3MF file. 3MF is a data format for use with additive manufacturing software, and includes information about materials, colours, and other information.

Determining the material specification codes may comprise assigning a material specification code based on the one or more rendered material properties.

Assigning a material specification code based on the one or more rendered material properties may comprise querying a look-up table containing material specification codes stored in association with one or more material properties and/or ranges of one or more material properties. The method may then comprise storing the material specification code per rendering location (for example per rendering coordinate or other coordinates representing the geometry of the surface of the object, for example the surface structure mesh). For example, the rendering locations or other coordinates representing the geometry of the surface of the object may be stored in a .OBJ file format, and the determined material specification codes may be stored in a companion .mtl file format. As another example, the coordinates representing the geometry of the surface of the object and the determined material specification codes may be stored in a .3MF file format.

The material specification codes per rendering location represent a realistic yet compact textured surface that can be imported for example into visualisation software for visualisation, or into additive manufacturing software for manufacture of a physical object.

For example, the method may comprise importing the determined material specification codes per rendering location (or other coordinate representing the geometry of the surface of the object) for example in a .mtl and .OBJ file format respectively, into visualisation software. The visualisation software may then generate a 3D representation of the textured surface. The textured surface realistically reproduces the surface texture of the object, yet is sufficiently compact to be used in highly interactive visualisation use cases, for example for augmented reality or virtual reality use cases, and/or for visualisation on devices that may not be sufficiently powerful to perform a full lighting simulation, for example in mobile devices. For example, the resulting textured surface may be used as a proxy for the physically-based volumetric renderer is such cases where full rendering is not desirable due to the potentially long rendering times involved.

As another example, the method may comprise importing the determined material specification codes per rendering location (or other coordinate representing the geometry of the surface of the object) into additive manufacturing software. For example, the material specification codes per coordinate may be in a mesh file or a .3MF file format. The additive manufacturing software may then manufacture, for example print, the textured surface as a physical object. The surface of the resulting physical object may have realistic textures derived from the complex material properties and global illumination effects captured by the physically-based volumetric rendering of the medial dataset. For example, parts of the surface of the object that exhibit strong glossy reflections may be printed with a corresponding glossy material. The resulting physical object may therefore appear more realistic, and hence allow enhanced utility in, for example, sizing up surgical implants or instruments, or planning therapy approaches, or for educational purposes.

In some examples, the determining the material specification code may comprise determining a material specification code for one or more regions of the object. For example, a region may be a face of the mesh surface structure. As another example, a region may be or comprise a part or component or sub-component of the object (which as mentioned above may be covered or concealed by another part or component of the object, or another object). This may be useful as some additive manufacturing software may be configured to print per face of a mesh, or per part or component or subcomponent, for example as opposed to per vertex.

For example, the method may comprise parsing the surface structure mesh as a file for additive manufacturing software, for example as a .3MF file. For example, the surface structure mesh file may be in a .OBJ or .STL or .WRL or X3D file format etc. The parsing may comprise parsing the surface structure mesh file to recognise connected or unconnected parts or objects or components of the surface structure mesh. For example, each mesh or component or part of the surface structure mesh may be parsed as a mesh object under the 3MF specification. The method may then comprise assigning a colour per face or object or component of the surface structure mesh, and assigning a material specification code per face or object or component of the surface structure mesh. For example, determining a material specification code for a face of a surface structure mesh may comprise averaging the rendered material property of each vertex defining the face, and assigning a material specification code to the face based on the average rendered material property.

The material specification codes per rendering location (or other coordinate representing the geometry of the surface of the object) or per region may be imported into an additive manufacturing software for manufacture of (e.g. printing) a physical object. Depending on the additive manufacturing process used therefore, the method may further comprise (not shown in Figure 1) calculating an extruder path way for an extruder of an additive manufacturing apparatus for the object, and/or interpolating slices of the surface structure for a 3D printer according to print resolution, and/or calculating a support material from which the surface texture corresponding to the material specification codes may be reproduced.

The above described method provides for transfer of realistically rendered surfaces onto a 3D printable proxy, for example a mesh proxy. Using path tracing in physically-based volumetric rendering simulates the full light transport through the scene of medical data and can simulate a wide range of visual effects. As described above, these effects may be used to further derive complex material properties for the 3D printing process. By leveraging the physically-based volumetric rendering techniques, the method addresses the challenge of creating realistic, patient specific and medically-relevant textures for 3D-printable surface models from 3D medical images.

Referring now to Figure 3, there is illustrated schematically an example network 301 in which an example rendering apparatus 304 may be used. The network 301 comprises a scanner 302, the rendering apparatus 304, a visualisation unit 314, a computer network such as the internet 316, and an additive manufacturing unit 318. It will be appreciated that in some examples, the network 301 may comprise fewer or additional components than those illustrated in Figure 3. For example, the network 301 may only comprise one or the other of the visualisation unit 314 and the additive manufacturing unit 318.

The scanner 302 may be any scanner for generating a medical dataset comprising a 3D representation 204 of a three-dimensional 3D object, for example a portion of a patient. For example, the scanner may be a computed tomography scanner, a magnetic resonance scanner, a positron emission tomography scanner, or the like. The scanner 302 is connected to the rendering apparatus 304, for example via wired or wireless connection. The scanner 302 may be arranged to transmit directly or indirectly or otherwise provide to the rendering apparatus 304 the medical dataset.

The rendering apparatus 304 comprises a processor 304 and a storage 208. The rendering apparatus 304 is for rendering one or more material properties of a surface of an object. The rendering apparatus 304 is arranged to perform the above described method of rendering one or more material properties of a surface of an object. For example, the memory 308 may store a computer program comprising instructions which when executed by the processor 306 cause the rendering apparatus 304 to perform the above described method. The program may be stored on a computer readable medium which may be read by the rendering apparatus 304 thereby to execute the program. The rendering apparatus 304 may be arranged to receive directly or indirectly or otherwise acquire from the scanner 302 the medical dataset 204.

The rendering apparatus 304 may be arranged to transmit information, for example, the above described material specification code per coordinate and/or per region, to the additive manufacturing unit 318 and/or to a visualisation unit 314. The transmission may be direct or indirect, for example via the internet 316.

The visualisation unit 314 may comprise visualisation software for displaying a three-dimensional representation 310 of the object 310, for example as derived from the material specification code per coordinate and/or per region supplied from the rendering apparatus 304. The visualisation unit 314 may comprise a display screen, and one or more graphics hardware or software components. The visualisation unit 314 may be or comprise a mobile device. The material specification code per coordinate and/or per region supplied from the rendering apparatus 304 allows for realistic reproduction of the textured surface of the object that is nonetheless sufficiently compact to be used in highly interactive visualisation use cases, for example for augmented reality or virtual reality use cases, and/or for visualisation on devices that have limited processing power.

The additive manufacturing unit 318 may be or comprise any suitable additive manufacturing apparatus suitable for manufacturing a physical object 320, for example as derived from the material specification code per coordinate and/or per region supplied from the rendering apparatus 304. The additive manufacturing unit 318 may comprise, for example, extrusion and/or printing apparatus. The material specification code per coordinate and/or per region supplied from the rendering apparatus 304 allows the additive manufacturing unit 318 to manufacture a physical object 320 that has realistic and complex surface textures, and hence which may allow enhanced utility in, for example, sizing up surgical implants or instruments, or planning therapy approaches, or for educational purposes.

The above examples are to be understood as illustrative examples of the invention. Further, it is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the invention, which is defined in the accompanying claims.

## Claims

1. A method of generating a three-dimensional representation of the surface texture of an object, the method comprising:
acquiring a medical dataset (204) comprising a three-dimensional representation (204a) of a three-dimensional object, the object having a surface;
determining, based on the medical dataset, a surface structure (206) coincident with, or offset from and parallel with, the surface of the object;
deriving, based on the determined surface structure (206), a plurality of rendering locations;
rendering, by a physically-based volumetric renderer and from the medical dataset (204), one or more material properties of the surface of the object, at each of the plurality of rendering locations, wherein the rendering comprises ray tracing, wherein each of the plurality of rendering locations corresponds to a ray origin for the ray tracing, wherein, for each ray origin, the ray direction is parallel to the surface normal of the surface structure at the ray origin; and
storing the one or more material properties per rendering location. location;
generating a three-dimensional representation of the surface texture of the object from the stored information.

2. The method according to claim 1, wherein one or more of the plurality of rendering locations are located substantially at the surface structure (206).

3. The method according to claim 1 or claim 2, the method comprising:
determining, based on one or more of the rendered material properties, one or more material specification codes for an additive manufacturing software and/or for a visualisation software.

4. The method according to claim 3, the method comprising:
transmitting the determined material specification code per rendering location and/or per region to an additive manufacturing unit (318) and/or to a visualisation unit (314).

5. The method according to any one of claim 1 to claim 4, wherein the surface structure (206) is a closed surface structure.

6. The method according to any one of claim 1 to claim 5, wherein the determining the surface structure (206) comprises:
segmenting the medical dataset (204) to produce a segmentation surface; and
generating the surface structure (206) from the segmentation surface.

7. The method according to any one of claim 1 to claim 5, wherein the determining the surface structure (206) comprises:
generating a point cloud representing the medical dataset (204); and
generating the surface structure (206) from the point cloud.

8. The method according to claim 7, wherein the generating the point cloud comprises:
rendering, by the physically-based volumetric renderer and from the medical dataset (204), pixels representing the object projected onto a two-dimensional viewpoint;
locating a depth for each of the pixels; and
generating the point cloud from the pixel and the depth for each of the pixels.

9. The method according to any one of claim 1 to claim 8, the method comprising:
offsetting one or more of the plurality of rendering locations from the surface structure (206) based on one or more detected properties of the medical dataset (204) and/or the surface of the object.

10. The method according to any one of claim 1 to claim 9, wherein the surface structure (206) comprises texture mapping coordinates, and the plurality of rendering locations are derived from the texture mapping coordinates.

11. The method according to any one of claim 1 to claim 10, wherein the surface structure (206) is a mesh.

12. The method according to claim 11, wherein one or more of the plurality of rendering locations are each located at a vertex of the mesh.

13. Apparatus (304) for rendering one or more material properties of a surface of an object, the apparatus being arranged to perform the method according to any one of claim 1 to claim 12.

14. A computer program comprising instructions which when executed by a computer (304) causes the computer (304) to perform the method of any one of claim 1 to claim 12.

## Patentansprüche

1. Verfahren zum Erzeugen einer dreidimensionalen Darstellung der Oberflächentextur eines Objekts, das Verfahren umfassend:
Erfassen eines medizinischen Datensatzes (204), umfassend eine dreidimensionale Darstellung (204a) eines dreidimensionalen Objekts, wobei das Objekt eine Oberfläche aufweist;
Bestimmen, basierend auf dem medizinischen Datensatz, einer Oberflächenstruktur (206), die mit der Oberfläche des Objekts übereinstimmt oder von dieser versetzt und parallel zu dieser ist;
Ableiten, basierend auf der bestimmten Oberflächenstruktur (206), einer Vielzahl von Rendering-Stellen;
Rendern, durch eine physikalisch basierte volumetrische Vorrichtung zum Rendern und aus dem medizinischen Datensatz (204), einer oder mehrerer Materialeigenschaften der Oberfläche des Objekts an jeder der Vielzahl von Rendering-Stellen, wobei das Rendern eine Strahlverfolgung umfasst, wobei jede der Vielzahl von Rendering-Stellen einem Strahlursprung für die Strahlverfolgung entspricht, wobei für jeden Strahlursprung die Strahlrichtung parallel zu der Oberflächennormalen der Oberflächenstruktur an dem Strahlursprung liegt; und
Speichern der einen oder der mehreren Materialeigenschaften pro Rendering-Stelle;
Erzeugen einer dreidimensionalen Darstellung der Oberflächentextur des Objekts aus den gespeicherten Informationen.

2. Verfahren nach Anspruch 1, wobei sich eine oder mehrere der Vielzahl von Rendering-Stellen im Wesentlichen an der Oberflächenstruktur (206) befinden.

3. Verfahren nach Anspruch 1 oder 2, das Verfahren umfassend:
Bestimmen, basierend auf einer oder mehreren der gerenderten Materialeigenschaften, eines oder mehrerer Materialspezifikationscodes für eine additive Fertigungssoftware und/oder für eine Visualisierungssoftware.

4. Verfahren nach Anspruch 3, das Verfahren umfassend:
Übertragen des bestimmten Materialspezifikationscodes pro Rendering-Stelle und/oder pro Bereich an eine additive Fertigungseinheit (318) und/oder an eine Visualisierungseinheit (314).

5. Verfahren nach einem der Ansprüche 1 bis 4, wobei die Oberflächenstruktur (206) eine geschlossene Oberflächenstruktur ist.

6. Verfahren nach einem der Ansprüche 1 bis 5, wobei das Bestimmen die Oberflächenstruktur (206) umfasst:
Segmentieren des medizinischen Datensatzes (204), um eine Segmentierungsoberfläche zu erzeugen; und
Erzeugen der Oberflächenstruktur (206) von der Segmentierungsoberfläche.

7. Verfahren nach einem der Ansprüche 1 bis 5, wobei das Bestimmen der Oberflächenstruktur (206) umfasst:
Erzeugen einer Punktwolke, die den medizinischen Datensatz (204) darstellt; und
Erzeugen der Oberflächenstruktur (206) aus der Punktwolke.

8. Verfahren nach Anspruch 7, wobei das Erzeugen der Punktwolke umfasst:
Rendern, durch die physikalisch basierte volumetrische Vorrichtung zum Rendern und von dem medizinischen Datensatz (204), von Pixeln, die das Objekt, das auf einen zweidimensionalen Blickpunkt projiziert wird, darstellen;
Anordnen einer Tiefe für jedes der Pixel; und
Erzeugen der Punktwolke aus dem Pixel und der Tiefe für jedes der Pixel.

9. Verfahren nach einem der Ansprüche 1 bis 8, das Verfahren umfassend:
Versetzen einer oder mehrerer der Vielzahl von Rendering-Stellen von der Oberflächenstruktur (206) basierend auf einer oder mehreren erfassten Eigenschaften des medizinischen Datensatzes (204) und/oder der Oberfläche des Objekts.

10. Verfahren nach einem der Ansprüche 1 bis 9, wobei die Oberflächenstruktur (206) Textur-Mapping-Koordinaten umfasst und die Vielzahl von Rendering-Stellen von den Textur-Mapping-Koordinaten abgeleitet werden.

11. Verfahren nach einem der Ansprüche 1 bis 10, wobei die Oberflächenstruktur (206) ein Netz ist.

12. Verfahren nach Anspruch 11, wobei sich eine oder mehrere der Vielzahl von Rendering-Stellen jeweils an einem Scheitelpunkt des Netzes befinden.

13. Vorrichtung (304) zum Rendern einer oder mehrerer Materialeigenschaften einer Oberfläche eines Objekts, wobei die Vorrichtung angeordnet ist, um das Verfahren nach einem der Ansprüche 1 bis 12 durchzuführen.

14. Computerprogramm, umfassend Anweisungen, die, wenn sie durch einen Computer (304) ausgeführt wird, den Computer (304) veranlassen, das Verfahren nach einem der Ansprüche 1 bis 12 durchzuführen.

## Revendications

1. Procédé de génération d'une représentation tridimensionnelle de la texture de la surface d'un objet, comprenant :
l'acquisition d'un ensemble de données médicales (204) comprenant une représentation tridimensionnelle (204a) d'un objet tridimensionnel, l'objet ayant une surface ;
la détermination, en fonction de l'ensemble de données médicales, d'une structure de surface (206) coïncidant avec la surface de l'objet ou décalée par rapport à celle-ci et parallèle à celle-ci ;
la dérivation, en fonction de la structure de surface (206) déterminée, d'une pluralité d'emplacements de rendu ;
le rendu, par un moteur de rendu volumétrique à base physique et à partir de l'ensemble de données médicales (204), d'une ou de plusieurs propriétés matérielles de la surface de l'objet, à chacun des emplacements de rendu, dans lequel le rendu comprend le traçage des rayons, dans lequel chacun des emplacements de rendu correspond à une origine de rayon pour le traçage des rayons, dans lequel la direction du rayon est, pour chaque origine de rayon, parallèle à la normale de surface de la structure de surface au niveau de l'origine du rayon ; et
le stockage d'une ou de plusieurs propriétés de matériaux par emplacement de rendu ;
la génération d'une représentation tridimensionnelle de la texture de la surface de l'objet à partir des informations stockées.

2. Procédé selon la revendication 1, dans lequel un ou plusieurs parmi les emplacements de rendu sont situés sensiblement au niveau de la structure de surface (206).

3. Procédé selon la revendication 1 ou la revendication 2, le procédé comprenant :
la détermination, en fonction d'une ou de plusieurs parmi les propriétés des matériaux rendus, d'un ou de plusieurs codes de spécification des matériaux pour un logiciel de fabrication additive et/ou pour un logiciel de visualisation.

4. Procédé selon la revendication 3, le procédé comprenant :
la transmission du code de spécification du matériau déterminé par lieu de rendu et/ou par région à une unité de fabrication additive (318) et/ou à une unité de visualisation (314).

5. Procédé selon l'une des revendications 1 à 4, dans lequel la structure de surface (206) est une structure de surface fermée.

6. Procédé selon l'une quelconque des revendication 1 à 5, dans lequel la détermination de la structure de surface (206) comprend :
la segmentation de l'ensemble de données médicales (204) pour produire une surface de segmentation ; et
la génération de la structure de surface (206) à partir de la surface de segmentation.

7. Procédé selon l'une quelconque des revendication 1 à 5, dans lequel la détermination de la structure de surface (206) comprend :
la génération d'un nuage de points représentant l'ensemble de données médicales (204) ; et
la génération de la structure de surface (206) à partir du nuage de points.

8. Procédé selon la revendication 7, dans lequel la génération du nuage de points comprend :
le rendu, par le moteur de rendu volumétrique à base physique et à partir de l'ensemble de données médicales (204), des pixels représentant l'objet projeté sur un point de vue bidimensionnel ;
la localisation d'une profondeur pour chacun des pixels ; et
la génération du nuage de points à partir du pixel et de la profondeur pour chacun des pixels.

9. Procédé selon l'une quelconque des revendications 1 à 8, le procédé comprenant :
le décalage d'un ou de plusieurs emplacements de rendu de la structure de surface (206) en fonction d'une ou de plusieurs propriétés détectées de l'ensemble de données médicales (204) et/ou de la surface de l'objet.

10. Procédé selon l'une des revendications 1 à 9, dans lequel la structure de surface (206) comprend des coordonnées de cartographie de texture, et la pluralité d'emplacements de rendu sont dérivés des coordonnées de cartographie de texture.

11. Procédé selon l'une quelconque des revendications 1 à 10, dans lequel la structure de surface (206) est une maille.

12. Procédé selon la revendication 11, dans lequel un ou plusieurs parmi les emplacements de rendu de la pluralité sont chacun situés à un sommet de la maille.

13. Appareil (304) pour rendre une ou plusieurs propriétés matérielles de la surface d'un objet, l'appareil étant agencé pour mettre en oeuvre le procédé selon l'une quelconque des revendications 1 à 12.

14. Programme informatique comprenant des instructions qui, lorsqu'il est exécuté par un ordinateur (304), permet à l'ordinateur (304) de mettre en oeuvre le procédé selon l'une quelconque des revendications 1 à 12.
